# EUROPEAN PATENT APPLICATION

(11) **EP 2 711 144 A1**
(43) Date of publication of application: **26.03.2014**
(21) Application number: 13182982.2
(22) Date of filing: 04.09.2013
(51) Int. Cl.: B25J 9/16, G05B 19/418

(54) **Robot system and workpiece transfer method**

(30) Priority: 20.09.2012 JP 2012207036
(71) Applicant: Kabushiki Kaisha Yaskawa Denki, Kitakyushu-shi, Fukuoka 806-0004 (JP)
(72) Inventor: Shimono, Toshiaki, Kitakyushu-shi, Fukuoka 806-0004 (JP); Namba, Taro, Kitakyushu-shi, Fukuoka 806-0004 (JP); Tomo, Toshihiro, Kitakyushu-shi, Fukuoka 806-0004 (JP)
(74) Representative: Viering, Jentschura & Partner Patent- und Rechtsanwälte

(57) **Abstract**

There is provided a robot system including a first robot arm provided with a holding unit for holding one of workpieces arranged on a workpiece arrangement unit and configured to transfer the one workpiece held by the holding unit, and a second robot arm provided with a detecting unit for detecting an arrangement state of the one workpiece. The robot system further includes a detecting operation control unit configured to perform a control operation in such a way that, during the operation of the first robot arm, the detecting unit detects the arrangement state of another one of the workpieces.

## Description

### Technical Field

Embodiments disclosed herein relate to a robot system and a workpiece transfer method.

### Background Art

JP2001-317911A discloses a robot (robot system) provided with a laser and a CCD camera (detector) for detecting the arrangement state of a workpiece arranged on a pallet.

In the robot disclosed in JP2001-317911A, however, a hand, a laser and a CCD (charge coupled device) camera are attached to a single robot. This poses a drawback in that the operation of detecting the shape and the orientation of a workpiece and the operation of moving the workpiece need to be performed one after another (serially). For that reason, there is a problem in that it is time-consuming to perform a series of works for detecting the shape and the orientation of the workpiece and then holding and transferring the workpiece.

### Summary of the Disclosure

Embodiments disclosed herein provide a robot system and a workpiece transfer method capable of shortening the time required in performing a series of works for holding and transferring a workpiece.

In accordance with an aspect of the disclosed embodiments, there is provided a robot system including a first robot arm provided with a holding unit for holding one of workpieces arranged on a workpiece arrangement unit and configured to transfer the one workpiece held by the holding unit, a second robot arm provided with a detecting unit for detecting an arrangement state of the one workpiece, and a detecting operation control unit configured to perform a control operation in such a way that, during the operation of the first robot arm, the detecting unit detects the arrangement state of another one of the workpieces.

As stated above, the robot system according to one aspect is provided with the detecting operation control unit for performing a control operation in such a way that, during the operation of the first robot arm, the detector of the second robot arm detects the arrangement state of the workpieces arranged on the workpiece arrangement unit. Thus, the operation of the first robot arm and the detecting operation of the second robot arm can be performed in parallel. It is therefore possible to shorten the cycle time required for the first robot arm and the second robot arm to perform a series of works for holding and transferring the workpieces.

In accordance with another aspect of the disclosed embodiments, there is provided a workpiece transfer method
which includes holding and transferring one of workpieces arranged on a workpiece arrangement unit by a first robot arm, based on an arrangement state of the workpiece, and detecting an arrangement state of another one of the workpieces arranged on the workpiece arrangement unit by a detecting unit of a second robot arm, during the operation of the first robot arm.

With the disclosed method, during the operation of the first robot arm, the detecting unit of the second robot arm detects the arrangement state of the workpieces arranged on the workpiece arrangement unit. Thus, the operation of the first robot arm and the detecting operation of the second robot arm can be performed in parallel. It is therefore possible to provide the workpiece transfer method which is capable of shortening the cycle time required for the first robot arm and the second robot arm to perform a series of works for holding and transferring the workpieces.

### Brief Description of the Drawings

Fig. 1 illustrates an overall view showing a robot system according to a first embodiment.
Fig. 2 depicts a top view of the robot system according to the first embodiment.
Fig. 3 shows a block diagram of the robot system according to the first embodiment.
Fig. 4 presents a flowchart for explaining the operation of the robot system according to the first embodiment.
Fig. 5 represents a view for explaining the holding operation of the robot system according to the first embodiment.
Fig. 6 illustrates a view for explaining the transferring operation of the robot system according to the first embodiment.
Fig. 7 depicts a view for explaining the placing operation and the detecting operation of the robot system according to the first embodiment.
Fig. 8 shows a view for explaining the retreating operation of the robot system according to the first embodiment.
Fig. 9 represents a view for explaining the operation for the adjustment of height positions of a laser light irradiating unit and a camera of the robot system according to the first embodiment.
Fig. 10 presents a top view showing a robot system according to a second embodiment.
Fig. 11 shows a flowchart for explaining the operation of the robot system according to the second embodiment.
Fig. 12 illustrates a view for explaining a robot system according to a first modified example of the first embodiment.
Fig. 13 represents a view for explaining a robot system according to a second modified example of the first embodiment.

### Detailed Description of the Preferred Embodiments

Hereinafter, embodiments will now be described with reference to the accompanying drawings.

### (First Embodiment)

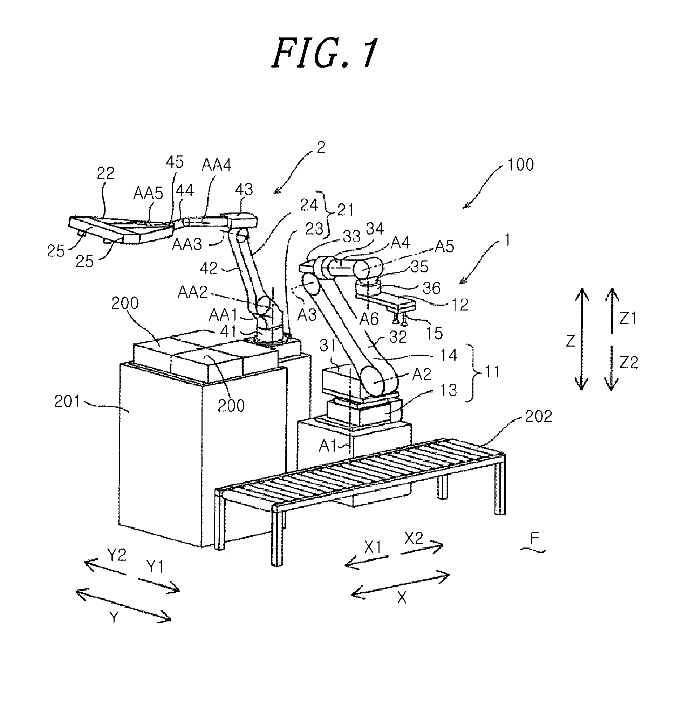

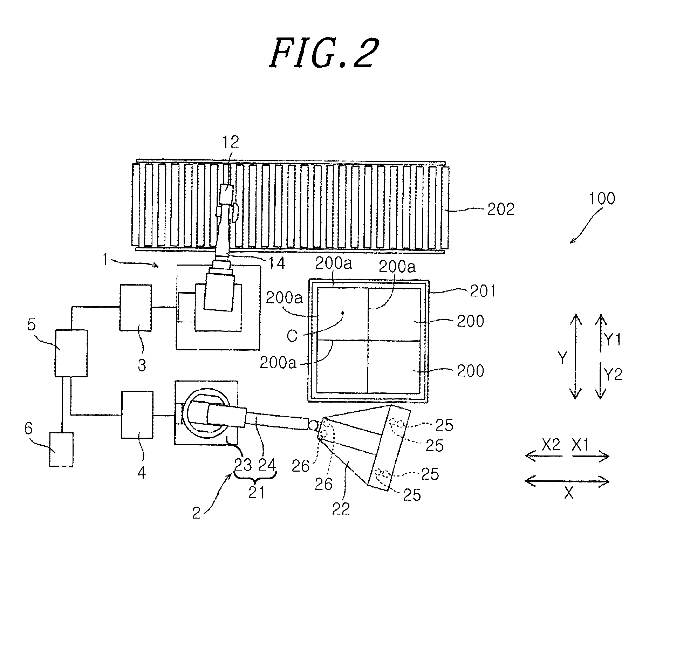

First, the configuration of a robot system 100 according to a first embodiment will be described with reference to Figs. 1 and 2.

As shown in Fig. 1, the robot system 100 includes a robot 1 (a de-palletizing robot 1) and a robot 2 (a detecting robot 2). Each of the robots 1 and 2 is, e.g., a vertical articulated robot. A pallet 201 stacked with a plurality of workpieces 200 is arranged near the robots 1 and 2 (at the side indicated by an arrow X1). Each of the workpieces 200 is composed of, e.g., a box-shaped workpiece. The pallet 201 has a box shape. A conveyor 202 for placement (conveyance) of the workpieces 200 is arranged near the robot 1 (at the side indicated by an arrow Y1). The pallet 201 is one example of a "workpiece arrangement unit". The conveyor 202 is one example of a "receiving unit".

As shown in Fig. 2, a robot controller 3 for controlling the operation of the robot 1 is connected to the robot 1. Likewise, a robot controller 4 for controlling the operation of the robot 2 is connected to the robot 2. The robot controllers 3 and 4 are connected to a PLC (Programmable Logic Controller) 5 for controlling the overall operations of the robot system 100. A measuring unit 6 for measuring the arrangement state of the workpiece 200 based on the detection signals coming from a laser light irradiating unit 25 and a camera 26 to be described later is connected to the PLC 5.

The robot controller 3, the robot controller 4, the PLC 5 and the measuring unit 6 are omitted in Figs. 1 and 5 to 8. The robot controller 3 is one example of a "holding operation control unit". The robot controller 4 is one example of a "detecting operation control unit" and a "retreating operation control unit". The PLC 5 is one example of a "holding operation control unit", a "detecting operation control unit" and a "retreating operation control unit".

As shown in Fig. 1, the robot 1 includes a robot body 11 and a robot hand 12 attached to the tip end of the robot body 11 to suck and hold the workpiece 200. The robot body 11 includes a base 13 and a robot arm 14 (a de-palletizing robot arm 14).

The base 13 is fixed to an installation surface F such as a floor, a wall or a ceiling. In the present embodiment, the robot arm 14 is configured to have six degrees of freedom. The robot arm 14 includes a plurality of arm structures 31 to 36. The arm structure 31 is connected to the base 13 to rotate about a rotation axis A1 perpendicular to the installation surface F. The arm structure 32 is connected to the arm structure 31 to rotate about a rotation axis A2 perpendicular to the rotation axis A1. The arm structure 33 is connected to the arm structure 32 to rotate about a rotation axis A3 parallel to the rotation axis A2. The arm structure 34 is connected to the arm structure 33 to rotate about a rotation axis A4 perpendicular to the rotation axis A3.

The arm structure 35 is connected to the arm structure 34 to rotate about a rotation axis A5 perpendicular to the rotation axis A4. The arm structure 36 is connected to the arm structure 35 to rotate about a rotation axis A6 perpendicular to the rotation axis A5. The terms "parallel" and "perpendicular" used herein are not intended to mean strictly parallel and strictly perpendicular but may be substantially parallel and substantially perpendicular. Servo motors are provided in a corresponding relationship with the respective rotation axes A1 to A6. Each of the servo motors is provided with an encoder for detecting the rotational position of each of the servo motors. The respective servo motors are connected to the robot controller 3. The respective servo motors are configured to operate in response to commands of the robot controller 3.

The robot hand 12 is attached to the tip end of the robot arm 14. The robot hand 12 is provided with a plurality of suction units 15 for sucking and holding the workpiece 200. The robot 1 (or the robot arm 14) is configured to transfer the workpiece 200 held (sucked) by the robot hand 12. The robot arm 14 (the de-palletizing robot arm 14) is one example of a "first robot arm". The robot hand 12 is one example of a "holding unit".

The robot 2 includes a robot body 21 and a robot hand 22 attached to the tip end of the robot body 21. The robot body 21 has a base 23 and a robot arm 24 (a detecting robot arm 24).

The base 23 is fixed to an installation surface F such as a floor, a wall or a ceiling. In the present embodiment, the robot arm 24 is configured to have five degrees of freedom. The robot arm 24 includes a plurality of arm structures 41 to 45. The arm structure 41 is connected to the base 23 to rotate about a rotation axis AA1 parallel to the installation surface F. The arm structure 42 is connected to the arm structure 41 to rotate about a rotation axis AA2 perpendicular to the rotation axis AA1. The arm structure 43 is connected to the arm structure 42 to rotate about a rotation axis AA3 parallel to the rotation axis AA2. The arm structure 44 is connected to the arm structure 43 to rotate about a rotation axis AA4 parallel to the rotation axis AA3. The arm structure 45 is connected to the arm structure 44 to rotate about a rotation axis AA5 perpendicular to the rotation axis AA4.

The terms "parallel" and "perpendicular" used herein are not intended to mean strictly parallel and strictly perpendicular but may be substantially parallel and substantially perpendicular. Servo motors are provided in a corresponding relationship with the respective rotation axes AA1 to AA5. Each of the servo motors is provided with an encoder for detecting the rotational position of each of the servo motors. The respective servo motors are connected to the robot controller 4. The respective servo motors are configured to operate in response to commands of the robot controller 4.

The robot hand 22 is attached to the tip end of the robot arm 24. The robot 2 operates the robot arm 24 pursuant to the arrangement state of the workpiece 200 arranged on the pallet 201. The robot 2 is configured to detect the arrangement state of the workpiece 200 arranged on the pallet 201 using laser light irradiating units 25 and cameras 26 to be described later. The robot arm 24 is one example of a "second robot arm".

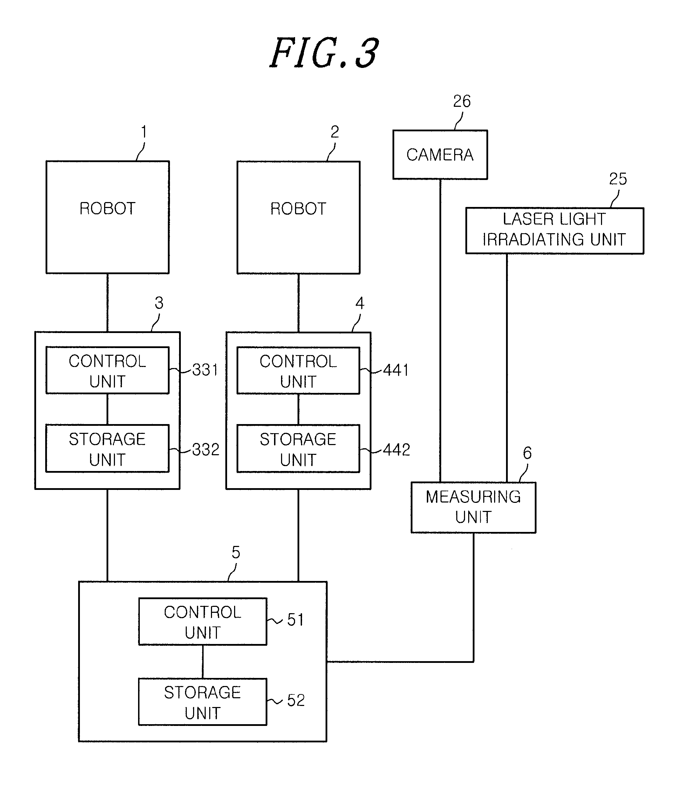

In the first embodiment, as shown in Fig. 2, four laser light irradiating units 25 for irradiating laser light toward the workpiece 200 and two cameras 26 (stereo cameras) for detecting the laser light reflected from the workpiece 200 are attached to the robot hand 22. The laser light irradiating units 25 and the cameras 26 are connected to the PLC 5 through the measuring unit 6 (see Fig. 3) formed of, e.g., a personal computer (PC). The laser light irradiating units 25 and the cameras 26 are one example of a "detecting unit".

The four laser light irradiating units 25 irradiate laser light toward the workpiece 200 in, e.g., a cross-shape (intersecting shape). The two cameras 26 detect the laser light reflected from the workpiece 200 (or take an image of the workpiece 200). Based on the detection result (the taken image), the measuring unit 6 calculates (or measures) four sides 200a of the workpiece 200 observed from above and one center position of the workpiece 200 (a point C). Moreover, based on the laser light reflected from the workpiece 200, the measuring unit 6 calculates the height position of the workpiece 200 (the distance from the laser light irradiating units 25 and the cameras 26 to the workpiece 200).

As shown in Fig. 3, the robot controller 3 is provided with a control unit 331 and a storage unit 332. Likewise, the robot controller 4 is provided with a control unit 441 and a storage unit 442. In addition, the PLC 5 is provided with a control unit 51 and a storage unit 52.

In the first embodiment, the PLC 5 and the robot controller 4 are configured to perform control operations in such a way that, during the operation of the robot arm 14 (in the present embodiment, during the operation of de-palletizing the workpiece 200 stacked on the pallet 201), the laser light irradiating units 25 and the cameras 26 of the robot arm 24 perform a detecting operation of detecting the arrangement state of the workpiece 200 arranged on the pallet 201. The robot controller 3 and the PLC 5 are configured to perform control operations in such a way that, based on the arrangement state of the workpieces 200 detected during the operation of the robot arm 14, the robot hand 12 of the robot arm 14 performs a holding operation of holding the workpiece 200 arranged on the pallet 201.

More specifically, in the first embodiment, the robot controller 4 and the PLC 5 are configured to perform control operations in such a way that, after the robot hand 12 of the robot arm 14 starts an operation of holding one of the workpieces 200 arranged on the pallet 201 to transfer the workpiece 200 thus held and before the robot hand 12 of the robot arm 14 restarts the operation of holding a next workpiece 200 arranged on the pallet 201, the laser light irradiating units 25 and the cameras 26 of the robot arm 24 detect the arrangement state of the workpieces 200 arranged on the pallet 201.

The time (e.g., about 2 seconds) required for the laser light irradiating units 25 and the cameras 26 of the robot arm 24 to detect the arrangement state of the workpiece 200 is set shorter than the time (e.g., about 6 seconds) required for the robot hand 12 of the robot arm 14 to hold one of the workpieces 200 and to restart the operation of holding one of the workpieces 200 arranged on the pallet 201. The robot controller 4 and the PLC 5 are configured to perform control operations in such a way that, until one of the workpieces 200 arranged on the pallet 201 is placed on the conveyor 202 for reception of the workpiece 200 by the robot hand 12 of the robot arm 14, the laser light irradiating units 25 and the cameras 26 of the robot arm 24 start detecting the workpieces 200 arranged on the pallet 201.

In the first embodiment, the robot controller 4 and the PLC 5 are configured to perform control operations in such a way that, after the robot hand 12 of the robot arm 14 places the held workpiece 200 on the conveyor 202 and before the robot arm 14 moves back to the vicinity of the pallet 201, a retreating operation for retreating the robot arm 24 having the laser light irradiating units 25 and the cameras 26 from the vicinity of the pallet 201 is performed so as to prevent the robot arm 24 from colliding with the robot arm 14.

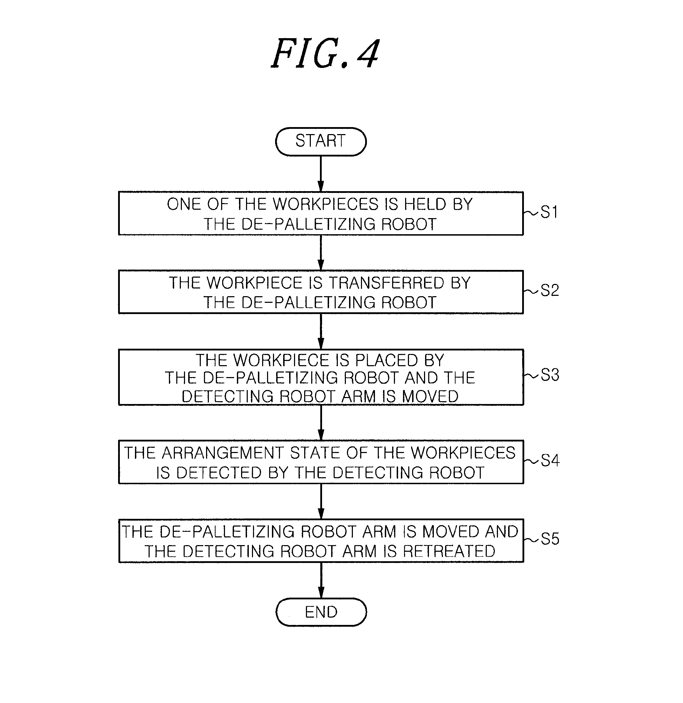

Next, the operation of the robot system 100 according to the first embodiment will be described with reference to Figs. 4 to 9.

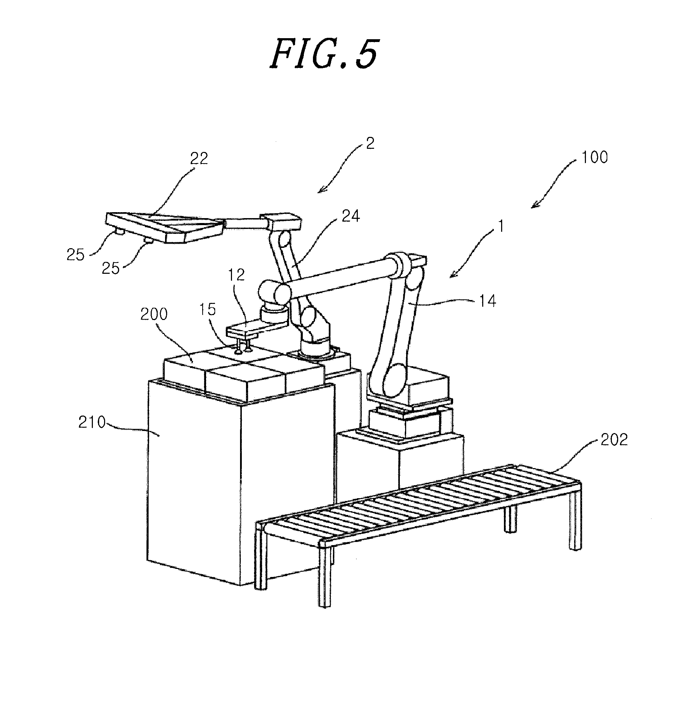

In step S1 shown in Fig. 4, the robot hand 12 of the robot arm 14 holds one of the workpieces 200 as shown in Fig. 5, based on the arrangement state of the workpieces 200 arranged at the uppermost end of the pallet 201, which is detected by the previous detecting operation of the laser light irradiating units 25 and the cameras 26.

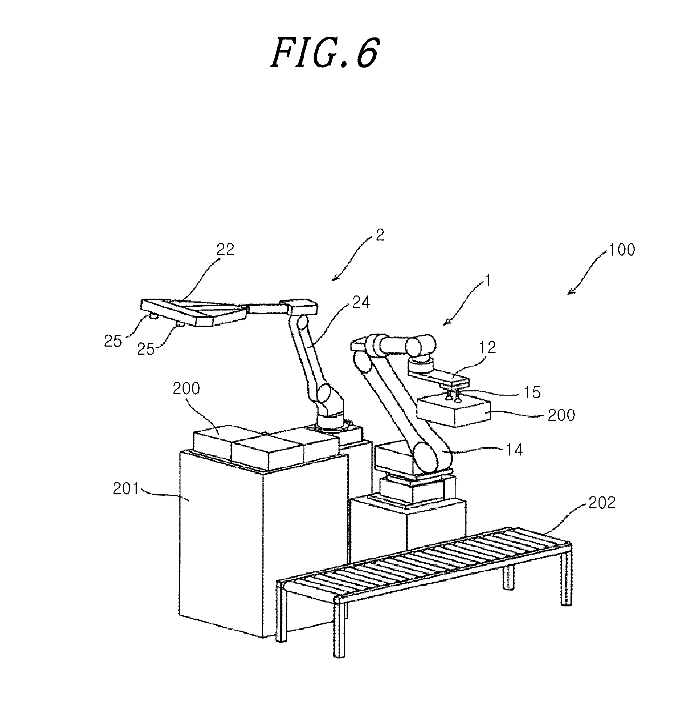

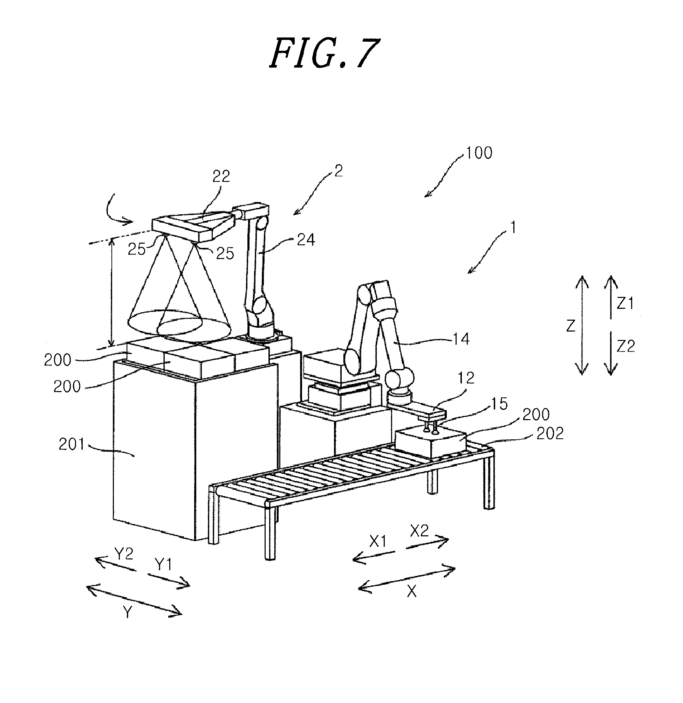

Then, in step S2, the robot arm 14 is moved as shown in Fig. 6, thereby transferring the workpiece 200 to the vicinity of the conveyor 202. In step S3, the workpiece 200 is placed on the conveyor 202 by the robot arm 14 as shown in Fig. 7. In parallel with the placing operation of the workpiece 200 performed by the robot arm 14 (or in parallel with the transferring operation of step S2), the robot arm 24 is moved so that the robot hand 22 (the laser light irradiating units 25 and the cameras 26) attached to the robot arm 24 can be arranged above the pallet 201 (at the side indicated by an arrow Z1).

In other words, in the first embodiment, the robot arm 24 is moved to a position where the operation of the robot arm 14 is not hindered by the robot arm 24 (i.e., to above the pallet 201) and then the arrangement state of the workpieces 200 arranged on the pallet 201 is detected. The robot arm 24 is moved to ensure that the distance between the uppermost ones of the workpieces 200 stacked on the pallet 201 and the laser light irradiating units 25 and the cameras 26 is kept at a distance d (e.g., about 1 m) enabling the laser light irradiating units 25 and the cameras 26 to detect the workpieces 200.

Thereafter, in step S4, as shown in Fig. 7, the laser light irradiating units 25 irradiate laser light toward the workpieces 200, and the cameras 26 detect the laser light reflected from the workpieces 200, thereby detecting the plan-view center position (the point C in Fig. 2) of the workpiece 200 on the pallet 201 to be held next.

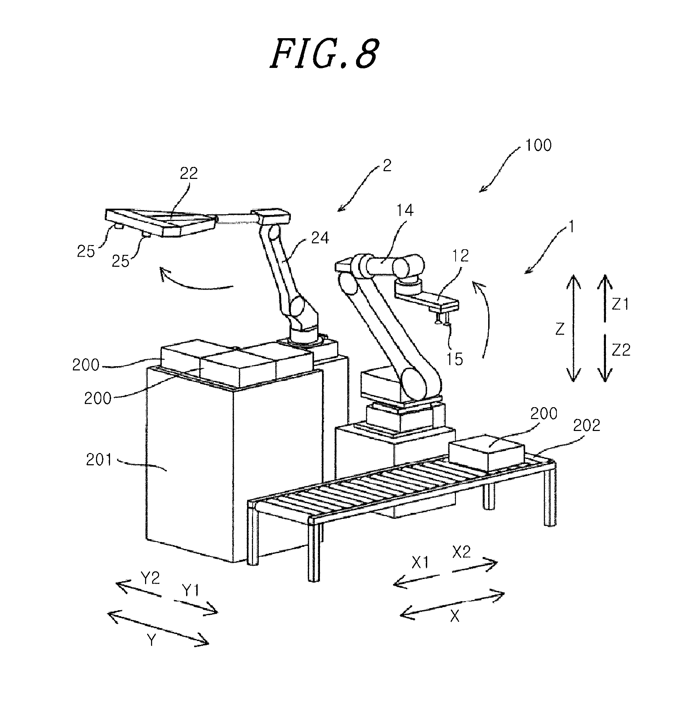

Then, in step S5, the robot arm 14 starts to move toward the vicinity of the pallet 201, as shown in Fig. 8. In parallel with the movement of the robot arm 14, the robot arm 24 is retreated away from the pallet 201 (in the direction indicated by an arrow Y2) so as to avoid collision with the robot arm 14. Thereafter, the flow returns back to step S1 where the robot hand 12 of the robot arm 14 restarts the operation of holding one of the workpieces 200, based on the arrangement state of the uppermost workpieces 200 detected by the present detecting operation of the laser light irradiating units 25 and the cameras 26 of the robot arm 24.

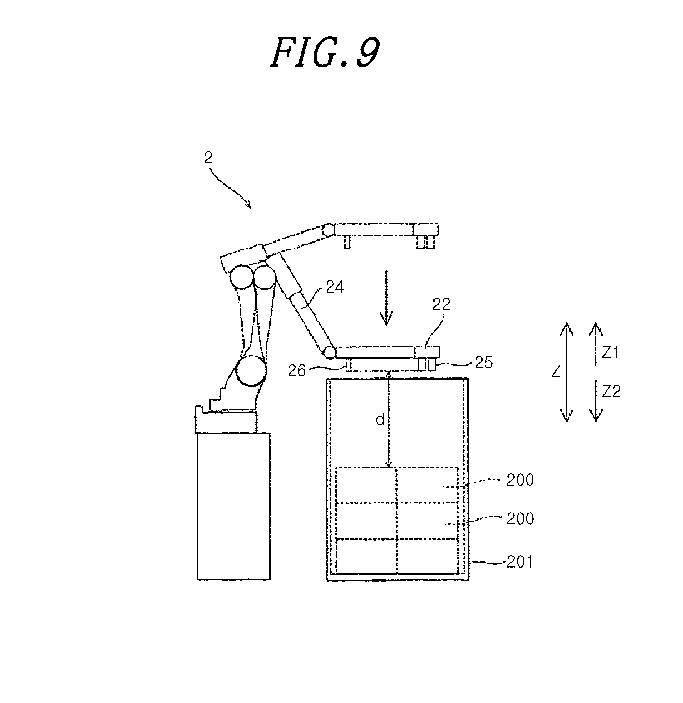

Steps S1 to S5 are repeated until all the workpieces 200 are removed from the pallet 201. In step S3, if the number of the workpieces 200 is reduced as shown in Fig. 9 (if the height position of the uppermost workpieces 200 becomes lower), the robot arm 24 (the robot hand 22) is moved downward (in the direction indicated by an arrow Z2) to ensure that the distance between the uppermost workpieces 200 and the laser light irradiating units 25 and the cameras 26 is kept at a distance d enabling the laser light irradiating units 25 and the cameras 26 to detect the workpieces 200. In this state, the workpieces 200 are detected by the laser light irradiating units 25 and the cameras 26.

In the first embodiment, as described above, the robot system 100 is provided with the robot controller 4 and the PLC 5 for performing control operations in such a way that, during the operation of the robot arm 14, the laser light irradiating units 25 and the cameras 26 of the robot arm 24 detect the arrangement state of the workpiece 200 arranged on the pallet 201. Thus, the operation of the robot arm 14 and the detecting operation of the laser light irradiating units 25 and the cameras 26 of the robot arm 24 can be performed in parallel. As a result, it is possible to shorten the time required for the robot arm 14 and the robot arm 24 to perform a series of works for holding and transferring the workpieces 200.

In the first embodiment, as described above, the robot controller 4 and the PLC 5 are configured to perform control operations such that, after the robot hand 12 of the robot arm 14 starts an operation of holding one of the workpieces 200 arranged on the pallet 201 to transfer the workpiece 200 thus held and before the robot hand 12 of the robot arm 14 restarts the operation of holding a next workpiece 200 arranged on the pallet 201, the laser light irradiating units 25 and the cameras 26 of the robot arm 24 detect the arrangement state of the workpieces 200 arranged on the pallet 201. Accordingly, it is possible to shorten the time required in performing a series of works including the holding and transferring operations of the robot arm 14 and the detecting operation of the laser light irradiating units 25 and the cameras 26 of the robot arm 24.

In the first embodiment, as described above, the robot controller 4 and the PLC 5 are configured to perform control operations in such a way that, until one of the workpieces 200 arranged on the pallet 201 is placed on the conveyor 202 by the robot hand 12 of the robot arm 14, the laser light irradiating units 25 and the cameras 26 of the robot arm 24 start detecting the workpieces 200 arranged on the pallet 201. Accordingly, unlike a case where the detection of the workpieces 200 is started just before starting the operation of holding the workpiece 200 to be held next, it is possible for the robot arm 14 to start the operation of holding the workpiece 200 in a state that the detection of the arrangement state of the workpieces 200 is definitely finished.

In the first embodiment, as described above, the robot controller 4 and the PLC 5 are configured to perform control operations in such a way as to move the robot arm 24 so that the robot arm 24 can detect the arrangement state of the workpiece 200 arranged on the pallet 201 in a position where the robot arm 24 does not hinder the operation of the robot arm 14. Accordingly, it is possible to easily restrain the robot arm 14 and the robot arm 24 from colliding with each other.

In the first embodiment, as described above, the workpieces 200 are stacked one above another on the pallet 201. The robot controller 4 and the PLC 5 are configured to perform control operations in such a way as to move the robot arm 24 so that the distance between the uppermost ones of the workpieces 200 stacked on the pallet 201 and the laser light irradiating units 25 and the cameras 26 can be kept at a distance d enabling the laser light irradiating units 25 and the cameras 26 to detect the workpieces 200. In this state, the arrangement state of the workpieces 200 arranged on the pallet 201 are detected by the laser light irradiating units 25 and the cameras 26. Since the distance between the workpiece 200 and the laser light irradiating units 25 and the cameras 26 can be kept at a distance d enabling the laser light irradiating units 25 and the cameras 26 to detect the workpieces 200, it is possible to reliably detect the arrangement state of the workpiece 200. In the first embodiment, as described above, the robot controller 4 and the PLC 5 are configured to perform control operations in such a way that, after the workpiece 200 held by the robot hand 12 of the robot arm 14 is placed on the conveyor 202 and before the robot arm 14 is moved back to the vicinity of the pallet 201, the robot arm 24 having the laser light irradiating units 25 and the cameras 26 is retreated from the vicinity of the pallet 201 so as to prevent the robot arm 24 from colliding with the robot arm 14. Accordingly, it is possible to restrain the robot arms 14 and 24 from being damaged due to the mutual contact of the robot arms 14 and 24.

In the first embodiment, as described above, the robot controller 3 and the PLC 5 are configured to perform control operations in such a way that, based on the arrangement state of the workpieces 200 detected during the operation of the robot arm 14, the robot hand 12 of the robot arm 14 holds one of the workpieces 200 arranged on the pallet 201. Accordingly, it is possible for the robot hand 12 of the robot arm 14 to reliably hold one of the workpieces 200 arranged on the pallet 201, while shortening the cycle time.

In the first embodiment, as described above, the robot controller 4 and the PLC 5 are configured to perform control operations in such a way that, during the de-palletizing operation of the workpiece 200 performed by the robot arm 14, the laser light irradiating units 25 and the cameras 26 of the robot arm 24 detect the arrangement state of the workpieces 200 arranged on the pallet 201. Accordingly, it is possible to de-palletize the workpieces 200 arranged on the pallet 201, while shortening the cycle time.

In the first embodiment, as described above, the robot controller 4 and the PLC 5 are configured to perform control operations in such a way that, during the operation of the robot arm 14, the laser light irradiating units 25 irradiate laser light toward the workpiece 200 to be held next and the cameras 26 detect the laser light reflected from the workpiece 200, thereby detecting the plan-view center position of the workpiece 200 on the pallet 201 to be held next. Accordingly, it is possible to easily detect the plan-view center position of the workpiece 200 to be held next, while shortening the cycle time.

In the first embodiment, as described above, the robot controller 4 and the PLC 5 are configured to perform control operations in such a way as to detect the plan-view center position of the workpiece 200 to be held next among the uppermost workpieces 200 of a plurality of workpieces stacked in multiple columns. Accordingly, it is possible to easily hold the workpiece 200 to be held next, based on the plan-view center position of the workpiece 200 detected as above.

### (Second Embodiment)

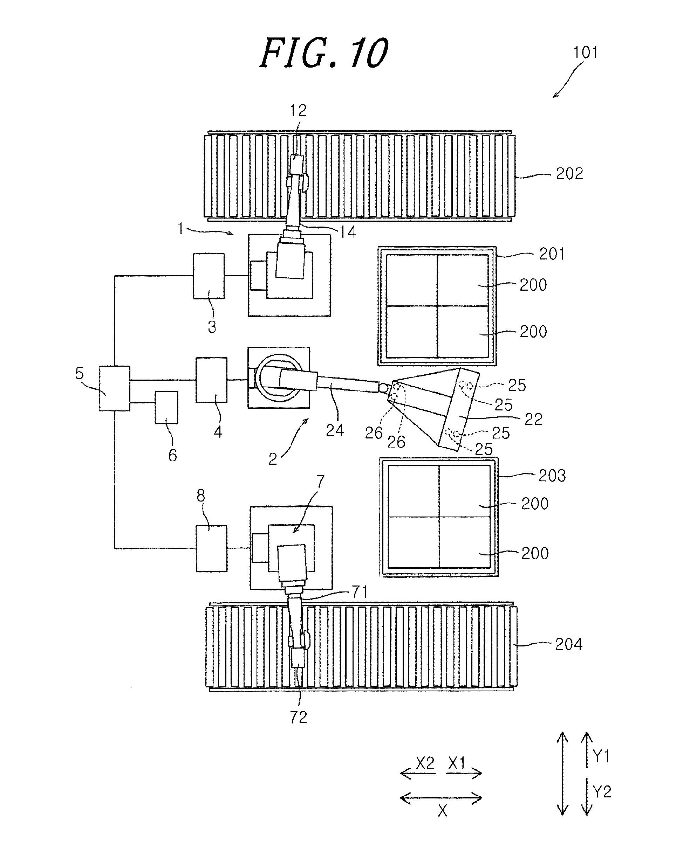

Next, the configuration of a robot system 101 according to a second embodiment will be described with reference to Fig. 10. In the second embodiment, unlike the first embodiment in which one detecting robot 2 is provided with respect to one pallet 201, there is provided one detecting robot 2 with respect to two pallets 201 and 203.

As shown in Fig. 10, the robot system 101 includes a robot 1 (a first de-palletizing robot 1), a robot 7 (a second de-palletizing robot 7) and a robot 2 (a detecting robot 2). A robot controller 8 is connected to the robot 7. A pallet 201 (a first pallet 201) stacked with a plurality of workpieces 200 is arranged near the robot 1 (at the side indicated by an arrow X1). Moreover, a conveyor 202 for receiving and conveying the workpieces 200 is arranged near the robot 1 (at the side indicated by an arrow Y1). A pallet 203 (a second pallet 203) stacked with a plurality of workpieces 200 is arranged near the robot 7 (at the side indicated by an arrow X1). Moreover, a conveyor 204 for receiving and conveying the workpieces 200 is arranged near the robot 7 (at the side indicated by an arrow Y2). The robot controller 8 is one example of a "holding operation control unit". The pallet 203 is one example of a "workpiece arrangement unit". The conveyor 204 is one example of a "receiving unit".

In the second embodiment, the robot 2 (the robot arm 24) is arranged between the robot 1 (the robot arm 14) and the robot 7 (the robot arm 71) which are arranged in one-to-one correspondence to the pallets 201 and 203. In other words, one robot 2 (one robot arm 24) is arranged with respect to the two pallets 201 and 203. The robot controller 4 and the PLC 5 are configured to perform control operations in such a way that the laser light irradiating units 25 and the cameras 26 attached to the single robot arm 24 detect the arrangement state of the workpiece 200 to be held next, which is arranged on each of the pallets 201 and 203. The robot arm 71 is one example of a "first robot arm". Other configurations of the second embodiment remain the same as those of the first embodiment.

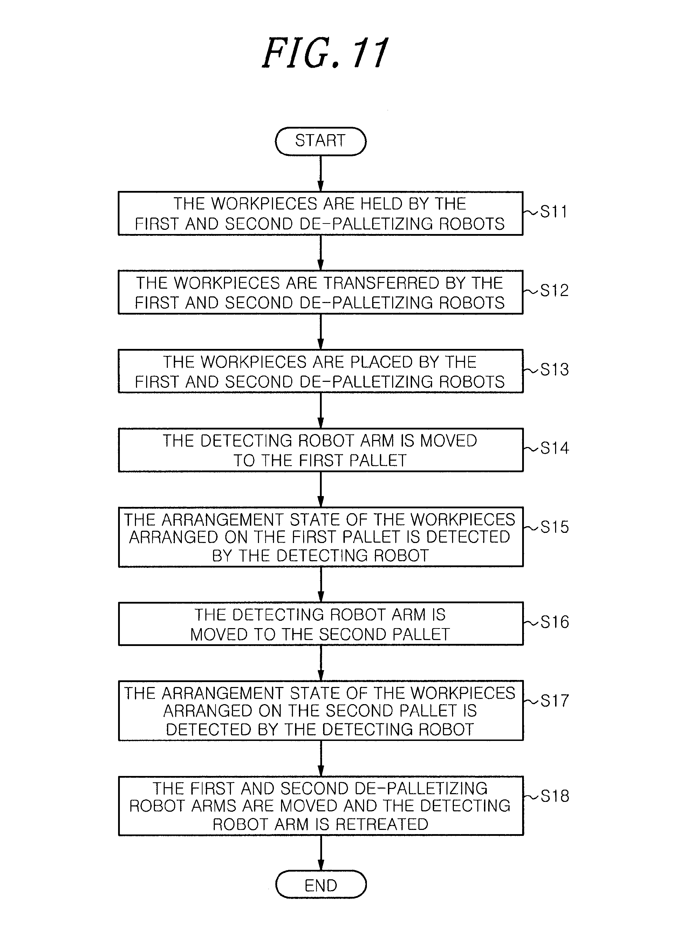

Next, the operation of the robot system 101 according to the second embodiment will be described with reference to Fig. 11.

First, in step S11 shown in Fig. 11, the robot hand 12 of the robot arm 14 (the first de-palletizing robot arm 14) and the robot hand 72 of the robot arm 71 (the second de-palletizing robot arm 71) hold the workpieces 200, based on the arrangement states of the workpieces 200 arranged at the uppermost ends of the pallets 201 and 203, which are detected by the previous detecting operation of the laser light irradiating units 25 and the cameras 26 of the robot arm 24.

Then, in step 12, the robot arms 14 and 71 are moved to thereby transfer the workpieces 200 to the vicinities of the conveyors 202 and 204. In step S13, the workpieces 200 are placed on the conveyors 202 and 204 by the robot arms 14 and 71. In step S14, in parallel with the placing operations of the workpieces 200 performed by the robot arms 14 and 71 (or in parallel with the transferring operations of step S12), the robot arm 24 is moved to the vicinity of the pallet 201. Thereafter, in step S15, the laser light irradiating units 25 and the cameras 26 of the robot arm 24 take an image of the workpiece 200 on the pallet 201 to be held next, thereby detecting the plan-view center position thereof.

In step S16, the robot arm 24 is moved to the vicinity of the pallet 203. Thereafter, in step S17, the laser light irradiating units 25 and the cameras 26 of the robot arm 24 take an image of the workpiece 200 on the pallet 203 to be held next, thereby detecting the plan-view center position thereof.

Subsequently, in step 18, the robot arms 14 and 71 start to move toward the vicinities of the pallets 201 and 203, respectively. In parallel with the movement of the robot arms 14 and 71, the robot arm 24 is retreated away from the pallets 201 and 203 (to a space between the pallets 201 and 203). Thereafter, the flow returns back to step S11 where the robot hand 12 of the robot arm 14 and the robot hand 72 of the robot arm 71 restart the operation of holding the workpieces 200, based on the arrangement states of the workpieces 200 detected by the present detecting operations of the laser light irradiating units 25 and the cameras 26 of the robot arm 24. In the second embodiment, as described above, during the time when the holding, transferring and placing operations of the workpieces 200 are performed by the two robot arms 14 and 71, the laser light irradiating units 25 and the cameras 26 of the single robot arm 24 take images of the workpieces 200 arranged on the pallets 201 and 203, thereby detecting the arrangement states of the workpieces 200.

In the second embodiment, as described above, the robot arm 24 is arranged in a single number with respect to the two pallets 201 and 203. The robot controller 4 and the PLC 5 are configured to perform control operations in such a way that the laser light irradiating units 25 and the cameras 26 attached to the single robot arm 24 detect the arrangement states of the workpieces 200 arranged in the two pallets 201 and 203. Accordingly, unlike a case where two robot arms 24 are provided to enable the laser light irradiating units 25 and the cameras 26 attached to the two robot arms 24 to detect the arrangement states of the workpieces 200 arranged in the two pallets 201 and 203, it is possible, with a simplified configuration, to detect the arrangement states of the workpieces 200 arranged in the two pallets 201 and 203.

In the second embodiment, as described above, the robot arms 14 and 71 are arranged in one-to-one correspondence to the two pallets 201 and 203. The robot arm 24 is arranged between the robot arms 14 and 71 which are arranged in one-to-one correspondence to the two pallets 201 and 203. Accordingly, it is possible for the single robot arm 24 to easily detect the arrangement states of the workpieces 200 to be held next by the two robot arms 14 and 71.

The embodiments disclosed herein are not limitative but illustrative in all respects. The scope of this disclosure is not defined by the description of the aforementioned embodiments but by the appended claims. All the modifications made within the spirit and scope equivalent to the claims are included in the scope of this disclosure.

For example, in the first and second embodiments described above, there has been illustrated an example where the operations of detecting the arrangement state of the workpiece arranged on the pallet, holding the workpiece and transferring the workpiece are performed by two robots, i.e., the de-palletizing robot and the detecting robot. Alternatively, the operations of detecting the arrangement state of the workpiece arranged on the pallet, holding the workpiece and transferring the workpiece may be performed by a single dual-arm robot. The number of control axes of each of the de-palletizing robot and the detecting robot can be appropriately selected. As the de-palletizing robot or the detecting robot, it may be possible to use a robot arm having four degrees of freedom or a robot arm having more than four degrees of freedom.

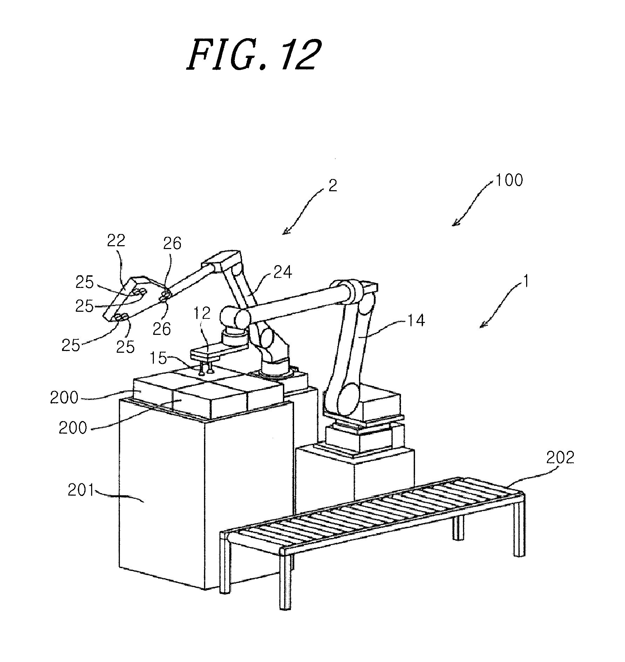

In the first and second embodiments described above, there has been illustrated an example where, until the workpiece is placed on the conveyor by the de-palletizing robot, the detecting robot starts detecting the arrangement state of the workpiece. Alternatively, as in a first modified example shown in Fig. 12, the detecting robot may perform the detection of the arrangement state of the workpiece 200 while the workpiece 200 is being held by the de-palletizing robot 1.

More specifically, the robot controller 4 and the PLC 5 may be configured to perform control operations in such a way that, during the workpiece holding operation performed by the robot hand 12 of the robot arm 14, the detecting robot detects the arrangement state of the workpiece 200 of the pallet 201 in a position where the holding operation of the robot arm 14 is not hindered (e.g., at the obliquely upper side of the workpieces 200). Consequently, the detection of the arrangement state of the workpiece 200 is performed at the initial stage of the workpiece holding and transferring operation of the robot arm 14. Therefore, even if the workpiece holding and transferring operation of the robot arm 14 is performed in a short time, it is possible to reliably detect the arrangement state of the workpiece 200.

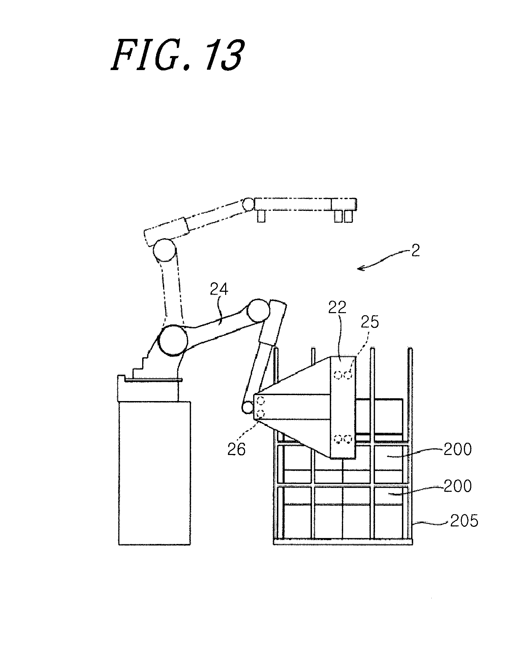

In the first and second embodiments described above, there has been illustrated an example where the detecting robot is configured to detect the arrangement state of the workpiece at the upper side of the workpiece. Alternatively, as in a second modified example shown in Fig. 13, the detecting robot 2 may detect the arrangement state of the workpiece 200 not only at the upper side of the workpiece 200 but also at the lateral side of the workpiece 200.

More specifically, the robot controller 4 and the PLC 5 may be configured to perform control operations in such a way that, during the operation of the robot arm 14, the laser light irradiating units 25 and the cameras 26 of the robot arm 24 detect the workpiece 200 of the pallet 205 at the upper side and the lateral side thereof. The pallet 205 is configured in such a shape that the arrangement state of the workpiece 200 can be detected even at the lateral side of the workpiece 200 (For example, the side surface of the pallet 205 may be formed into a reticular shape.). Accordingly, it is possible to detect not only the plan-view arrangement state of the workpiece 200 but also the sideview arrangement state of the workpiece 200. This makes it possible to accurately detect the arrangement state of the workpiece 200 arranged on the pallet 205.

In the first and second embodiments described above, there has been illustrated an example where the workpieces are stacked on the pallet. As an alternative example, the workpieces may be stacked on a floor surface instead of the pallet. Moreover, the workpieces may be laid out flat.

In the first and second embodiments described above, there has been illustrated an example where the robot hand of the detecting robot is provided with two cameras (stereo cameras). As an alternative example, the robot hand of the detecting robot may be provided with a single camera. In this case, two images of the workpiece can be taken in different positions with a single camera by moving the robot arm of the detecting robot. This makes it possible to obtain a stereo image.

In the first and second embodiments described above, there has been illustrated an example where the de-palletizing robot and the detecting robot are respectively provided with the robot controllers which in turn are connected to the upper controller (the PLC). As an alternative example, the operations of the de-palletizing robot and the detecting robot may be controlled by a single controller.

In the first and second embodiments described above, there has been illustrated an example where the workpiece is placed on the conveyor. As an alternative example, the workpiece may be placed on a device (or a place) rather than the conveyor.

In the second embodiment described above, there has been illustrated an example where one detecting robot is arranged with respect to two pallets. As an alternative example, one detecting robot may be arranged with respect to three or more pallets. In case of using three or more pallets, one detecting robot may be arranged with respect to every two or three pallets. In the second embodiment described above, there has been illustrated an example where one transferring robot is arranged with respect to each of the two pallets. Alternatively, one transferring robot may be arranged with respect to two or more pallets. In either case, it is preferred that the number of the transferring robot arms is larger than the number of the detecting robot arm.

In the second embodiment described above, there has been illustrated an example where, during the time when the workpiece holding, transferring and placing operations are performed by two de-palletizing robot arms, the laser light irradiating units and the cameras of one detecting robot arm detect the arrangement states of the workpieces arranged on the first and second pallets. However, the operations of the de-palletizing robot arm and the detecting robot arm are not limited thereto. As an alternative example, during the time when the workpiece holding, transferring and placing operations are performed by a first de-palletizing robot arm, the laser light irradiating units and the cameras of the detecting robot arm may detect the arrangement state of the workpiece arranged on the first pallet. Thereafter, during the time when the workpiece holding, transferring and placing operations are performed by a second de-palletizing robot arm, the laser light irradiating units and the cameras of the detecting robot arm may detect the arrangement state of the workpiece arranged on the second pallet.

It should be understood by those skilled in the art that various modifications, combinations, sub-combinations and alterations may occur depending on design requirements and other factors insofar as they are within the scope of the appended claims or the equivalents thereof.

## Claims

1. A robot system, comprising:
a first robot arm provided with a holding unit for holding one of workpieces arranged on a workpiece arrangement unit and configured to transfer the one workpiece held by the holding unit;
a second robot arm provided with a detecting unit for detecting an arrangement state of the one workpiece; and
a detecting operation control unit configured to perform a control operation in such a way that, during the operation of the first robot arm, the detecting unit detects the arrangement state of another one of the workpieces.

2. The robot system of claim 1, wherein the detecting operation control unit is configured to perform a control operation such that, after the holding unit starts an operation of holding the one workpiece to transfer the one workpiece and before the holding unit starts the operation of holding the another workpiece, the detecting unit detects the arrangement state of the another workpiece.

3. The robot system of claim 2, wherein the detecting operation control unit is configured to perform a control operation such that, before the one workpiece held by the holding unit is placed on a receiving unit for receiving the workpieces, the detecting unit starts the detection of the arrangement state of the another workpiece.

4. The robot system of any one of claims 1 to 3, wherein the detecting operation control unit is configured to perform a control operation such that the second robot arm moves to a position where the second robot arm does not hinder the operation of the first robot arm and detects the arrangement state of the another workpiece.

5. The robot system of any one of claims 1 to 4, wherein the workpieces are stacked one above another on the workpiece arrangement unit, and
wherein the detecting operation control unit is configured to perform a control operation such that the second robot arm moves to a position where the distance between an uppermost one of the stacked workpieces and the detecting unit is kept at a distance enabling the detecting unit to detect the uppermost workpiece and detects the arrangement state of the uppermost workpiece.

6. The robot system of claim 3, further comprising:
a retreating operation control unit configured to perform a control operation such that, before the first robot arm moves to a position near the workpiece arrangement unit after the one workpiece held by the holding unit has been placed on the receiving unit, the second robot arm is retreated from the vicinity of the workpiece arrangement unit to avoid colliding with the first robot arm.

7. The robot system of any one of claims 1 to 6, further comprising:
a holding operation control unit configured to perform a control operation such that the holding unit holds the another workpiece based on the arrangement state of the another workpiece detected during the operation of the first robot arm.

8. The robot system of any one of claims 1 to 7, wherein the detecting operation control unit is configured to perform a control operation such that, while the first robot arm is de-palletizing the one workpiece from the workpiece arrangement unit, the detecting unit detects the arrangement state of the another workpiece.

9. The robot system of any one of claims 1 to 8, wherein the detecting unit includes a laser light irradiating unit configured to irradiate laser light toward the another workpiece and a camera configured to detect the laser light reflected from the another workpiece, and
wherein the detecting operation control unit is configured to perform a control operation such that, during the operation of the first robot arm, the laser light irradiating unit irradiates the laser light toward the another workpiece and the camera detects the laser light reflected from the another workpiece, thereby detecting a plan-view center position of the another workpiece.

10. The robot system of claim 9,
wherein the workpieces are stacked in multiple columns on the workpiece arrangement unit, and
wherein the detecting operation control unit is configured to perform a control operation to detect a plan-view center position of the another workpiece to be held next among uppermost ones of the workpieces.

11. The robot system of any one of claims 1 to 10, further comprising one or more additional workipiece arrangement units,
wherein the detecting operation control unit is configured to perform a control operation such that the detecting unit of the second robot arm detects the arrangement states of the workpieces, to be held by the holding unit, which are arranged on the additional workpiece arrangement units.

12. The robot system of claim 11, further comprising:
an additional first robot arm for each of the additional workipiece arrangement units,
wherein the second robot arms is arranged between two first robot arms.

13. The robot system of claim 11 or 12,
wherein the detecting operation control unit is configured to perform a control operation such that, during the workpiece holding operation of the holding unit of the first robot arm, the detecting unit detects the arrangement state of the workpiece arranged on the workpiece arrangement unit in a position where the workpiece holding operation of the first robot arm is not hindered.

14. The robot system of claim 11 or 12, wherein the detecting operation control unit is configured to perform a control operation such that, during the operation of the first robot arm, the detecting unit detects the arrangement state of the workpiece arranged on the workpiece arrangement unit at an upper side and a lateral side of the workpiece arrangement unit.

15. A workpiece transfer method, comprising:
holding and transferring one of workpieces arranged on a workpiece arrangement unit by a first robot arm, based on an arrangement state of the workpiece; and
detecting an arrangement state of another one of the workpieces arranged on the workpiece arrangement unit by a detecting unit of a second robot arm, during the operation of the first robot arm.
